# FASCICULE DE BREVET EUROPEEN

(11) **EP 3 477 078 B1**
(45) Date de publication et mention de la délivrance du brevet: **12.08.2020**
(21) Numéro de dépôt: 18197669.7
(22) Date de dépôt: 28.09.2018
(51) Int. Cl.: F02C 7/18, F01D 25/12, F01D 17/08

(54) **TURBOMACHINE D'AÉRONEF COMPRENANT UN COMPARTIMENT MUNI D'UN ENSEMBLE DE VENTILATION**
TURBOTRIEBWERK EINES LUFTFAHRZEUGS, DAS EIN MIT EINER BELÜFTUNGSEINHEIT AUSGESTATTETES ABTEIL UMFASST
AIRCRAFT TURBINE ENGINE COMPRISING A COMPARTMENT EQUIPPED WITH A VENTILATION UNIT

(30) Priorité: 24.10.2017 FR 1760009
(43) Date de publication de la demande: 01.05.2019
(73) Titulaire: Airbus Operations S.A.S., 31060 Toulouse (FR)
(72) Inventeur: ZEBIAN, Maxime, 31790 SAINT-SAUVEUR (FR)
(74) Mandataire: Gicquel, Olivier Yves Gérard

(56) Documents cités:
- EP-A1- 0 643 218
- EP-A1- 1 610 606
- EP-A2- 2 642 083
- WO-A1-2015/042398
- US-A- 4 296 599
- US-A1- 2017 191 372

## Description

L'invention concerne une turbomachine d'aéronef de type à double flux. Plus particulièrement, l'invention concerne un ensemble de ventilation destiné à ventiler un compartiment de ladite turbomachine.

Une turbomachine à double flux comprend généralement une pluralité de compartiments réalisés dans l'épaisseur de sa nacelle ou de son interveine. Un compartiment comprend une pluralité de systèmes thermosensibles et doit être ventilé pour que la température dans le compartiment reste inférieure à une température limite. A cet effet, de l'air froid en provenance de l'extérieur de la turbomachine ou de son conduit de soufflante est prélevé via une écope et circule dans le compartiment.

Une turbomachine selon l'art antérieur est divulguée dans le document EP2642083.

La forme de l'écope engendre une trainée qui nuit aux performances de l'aéronef en vol, notamment en phase de croisière. Il existe donc un besoin d'un ensemble de ventilation pour ventiler les compartiments de la turbomachine qui engendre moins d'impacts sur les performances de l'aéronef en vol.

L'invention a pour objectif de remédier à ce problème et concerne une turbomachine de type à double flux comprenant au moins un compartiment équipé d'un ensemble de ventilation, telle que revendiquée dans la revendication 1.

L'ensemble de ventilation selon l'invention permet de protéger les éléments thermosensibles d'un compartiment contre l'échauffement thermique en étant déployable-rétractable automatiquement en fonction des besoins en air frais desdits éléments. L'ensemble de ventilation engendre peu d'impacts sur les performances de l'aéronef en vol de croisière. En outre, l'ensemble de ventilation selon l'invention, doté d'un fonctionnement passif, est simple à mettre en œuvre car il ne comprend pas de système actif de type électrique ou hydraulique.

Les caractéristiques de l'invention mentionnées ci-dessus, ainsi que d'autres, apparaîtront plus clairement à la lecture de la description suivante d'exemples de réalisation, ladite description étant faite en relation avec les dessins joints, parmi lesquels :
- la figure 1 est une vue schématique d'une turbomachine vue en coupe selon son axe longitudinal, la turbomachine comprenant un compartiment équipé d'un ensemble de ventilation selon l'invention réalisé dans l'épaisseur de la nacelle ainsi qu'un compartiment équipé d'un ensemble de ventilation selon l'invention réalisé dans l'épaisseur de l'interveine ;
- les figures 2a, 2b, 2c sont des vues schématiques représentant différents états de l'ensemble de ventilation d'un compartiment de la turbomachine illustré à la figure 1, selon un premier mode de réalisation de l'invention ;
- les figures 3a, 3b, 3c sont des vues similaires aux figures 2a-c représentant différents états de l'ensemble de ventilation d'un compartiment de la turbomachine illustré à la figure 1, selon un second mode de réalisation de l'invention ; et
- les figures 4a, 4b, 4c sont des vues similaires aux figures 2a-c représentant différents états de l'ensemble de ventilation d'un compartiment de la turbomachine illustré à la figure 1, selon un troisième mode de réalisation de l'invention.

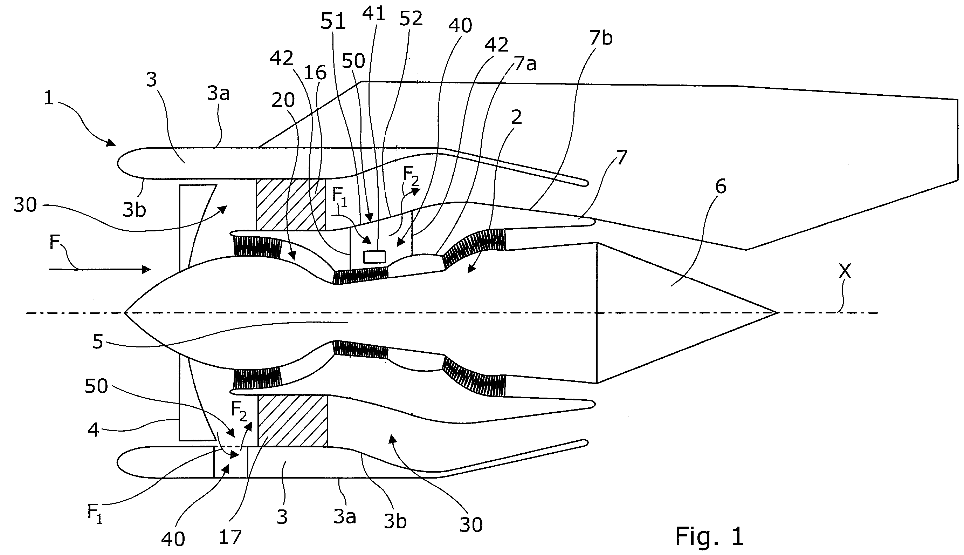

En référence avec la figure 1, une turbomachine 1 à double flux comprend une nacelle annulaire 3, centrée sur un axe longitudinal X (dit axe moteur) et entourant un moteur 2.

Dans le sens d'écoulement d'un flux d'air (flèche F) traversant la turbomachine 1 lors du fonctionnement de cette dernière, le moteur 2 comprend d'amont en aval et centrés sur l'axe moteur X, une soufflante 4, un corps du moteur 5 et une tuyère 6.

Le corps du moteur 5 comprend des éléments permettant de faire tourner la soufflante 4 lorsque le moteur 2 est mis en marche. La turbomachine 1, comprend de plus, en aval de la soufflante 4, une interveine annulaire 7 concentrique au corps du moteur 5. L'interveine 7 comprend une paroi interne 7a qui délimite avec le moteur 2 une veine annulaire de flux d'air chaud 20 qui s'étend le long de l'axe moteur X.

La nacelle 3 comprend une paroi externe 3a et une paroi interne 3b et constitue l'enveloppe externe de la turbomachine 1. La nacelle 3 entoure l'interveine 7 avec laquelle elle est concentrique. La paroi externe 3a de la nacelle forme la paroi externe de la turbomachine 1 tandis que la paroi interne 3b de la nacelle 3 délimite, avec la paroi externe 7b de l'interveine 7 une veine annulaire de flux d'air froid, dit conduit de soufflante 30 qui s'étend le long de l'axe moteur X.

La turbomachine comprend différents compartiments 40 étanches au feu qui sont, par exemple, réalisés dans l'épaisseur de l'interveine 7. Une pluralité d'éléments thermosensibles 41 est arrangée dans chaque compartiment 40. Un élement thermosensible est, par exemple, un composant d'un circuit hydraulique, d'un circuit d'huile, d'un circuit hydraulique ou d'un circuit électrique de la turbomachine.

Les compartiments 40 sont séparés les uns des autres par des cloisons pare-feu 42. Chaque compartiment de l'interveine est ainsi délimité par les cloisons pare-feu 42, la paroi externe 7b de l'interveine 7 qui sépare l'intérieur du compartiment 40 du flux d'air froid circulant dans le conduit de soufflante 30 lorsque le moteur 2 fonctionne et fait tourner la soufflante 4, et la paroi interne 7a de l'interveine 7 qui sépare l'intérieur du compartiment du flux d'air chaud circulant dans la veine annulaire de flux d'air chaud 20.

De manière connue, un compartiment 40 de la turbomachine 1 est équipé d'un ensemble de ventilation 50 comprenant :
- au moins une ouverture traversante, dit ouverture de ventilation 51, réalisée dans la paroi externe 7b de l'interveine afin de faire rentrer de l'air froid du conduit de soufflante 30 dans le compartiment 40 (flèche F1), et
- au moins une autre ouverture traversante, dite ouverture d'évacuation 52, réalisée en aval de la ou des ouvertures de ventilation 51 pour évacuer l'air chaud du compartiment 40 vers le conduit de soufflante 30 (flèche F2).

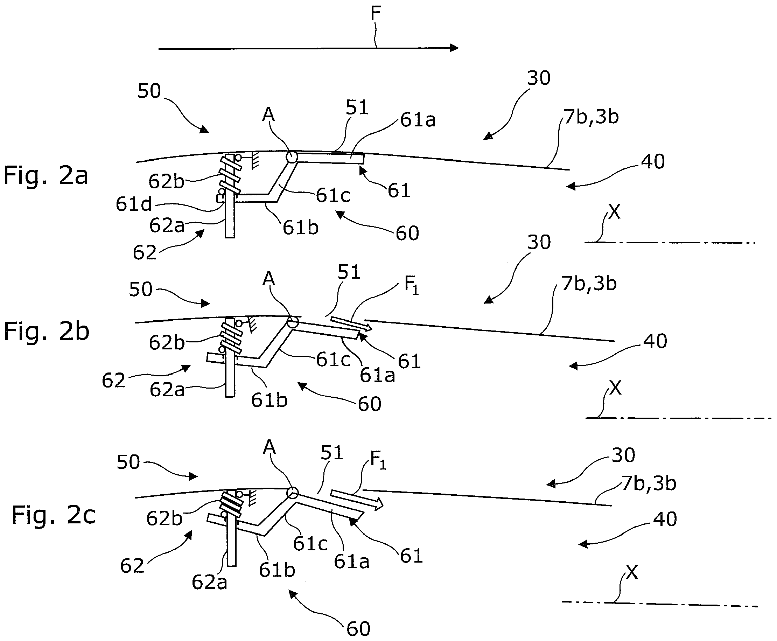

Selon l'invention, et en référence avec les figures 2a-c, chaque ouverture de ventilation 51 comprend un système d'ouverture passif 60. Selon un mode de réalisation, le système d'ouverture passif 60 comprend un volet 61 et un dispositif d'actionnement passif 62 (disposé dans le compartiment 40) du volet 61 entre une position d'obturation (figure 2a) et une position d'ouverture (figure 2c) de afin de ventiler le compartiment 40. Dans la position d'obturation, le volet 61 obture totalement l'ouverture de ventilation 51 tandis que dans la position d'ouverture, le volet 61 libère l'ouverture de ventilation de sorte que de l'air froid peut pénétrer dans le compartiment 40 (flèche F1) lors du fonctionnement du moteur 2.

Par actionnement passif, on entend que l'actionnement se fait sans recours à des moyens extérieurs comme, par exemple, des vérins hydrauliques ou pneumatiques ou des moteurs électriques.

Le volet 61 se présente sous la forme d'une pièce de forme complémentaire à celle de l'ouverture de ventilation 51 et a ainsi, par exemple, une forme parallélépipédique (le volet est éventuellement courbé pour s'adaptée à la forme de la paroi externe 7b de l'interveine) avec sa longueur orientée suivant l'axe moteur X de la turbomachine.

Le volet se présente sous la forme d'un bras en forme de Z comprenant trois portions distinctes. Le volet 61 est monté articulé en liaison pivot (fonctionnement de type clapet) au compartiment 40 selon un axe de pivot A perpendiculaire à l'axe moteur X.

Le volet présente un premier 61a et un second plateaux 61b parallèles entre eux qui sont joints par une pièce intermédiaire 61c inclinée par rapport aux plans des deux plateaux. Le premier plateau 61 présente une forme complémentaire à celle de l'ouverture de ventilation 51 et est par exemple de forme parallélépipédique avec sa longueur orientée suivant l'axe moteur X.

Lorsque le volet 61 se déplace vers sa position d'ouverture, le premier plateau 61a s'enfonce dans le compartiment pour libérer l'ouverture de ventilation 51.

La liaison pivot est, par exemple, formée par une attache de type charnière (non représentée) fixée d'une part sur la paroi externe 7b (côté compartiment) et d'autre part au premier plateau 61a (du côté de la face orientée vers le compartiment 40). En alternative, la liaison pivot est formée, de part et d'autre du volet 61, par un pion traversant (non représenté) un trou pratiqué dans une chape (non représentée) arrangée sur la paroi externe 7b de l'interveine (côté compartiment) et dans une arête latérale du volet 61.

Le dispositif d'actionnement passif 62 comprend, un tube fixe 62a disposé à l'intérieur du compartiment 40 et un ressort 62b entourant le tube 62a au niveau d'une portion du tube 62a, dite portion déplacement, perpendiculaire à l'axe moteur X. Le ressort 62b est réalisé dans un alliage à mémoire de forme thermosensible en ce sens qu'il se dilate ou se comprime en fonction de la température à laquelle il est soumis.

Le tube 62a est dit fixe car il est fixé au compartiment 40 via, par exemple, une bride d'accroche.

Le ressort 62b est arrangé entre le volet 61 et la paroi externe 7b de l'interveine afin de ne pas encombrer le compartiment 40. Le second plateau 61b de volet 61 peut comprendre un évidement 61d pour laisser passer le tube 62a si cela s'avère nécessaire par construction.

Le ressort 62b est éduqué de façon à se comprimer de façon continue, vers une position comprimée extrême (figure 2c), lorsque sa température s'élève au-dessus d'une température seuil et au contraire à se dilater de façon continue lorsque sa température tend vers la température de seuil. La position dilatée extrême (figure 2a) du ressort 62b est atteinte lorsque sa température est proche de la température seuil.

Le ressort 62b a une première extrémité fixée à un élément fixe du compartiment 40 (par exemple au tube 62a, une cloison pare-feu 42, la paroi externe 7b de l'interveine) et une seconde extrémité mécaniquement liée au second plateau 61b du volet.

En utilisation, lorsque la température de l'air dans le compartiment 40 dépasse la température seuil, le ressort 62 se comprime et sa seconde extrémité se rapproche de sa première extrémité fixe, entraînant un déplacement (figure 2b) du volet 61 vers sa position d'ouverture (figure 2c) atteinte lorsque le ressort 62 est comprimé au maximum. Au contraire, lorsque le ressort se dilate quand la température dans le compartiment 40 tend vers la température seuil, la seconde extrémité du ressort s'éloigne de la première extrémité ce qui entraine un déplacement (figure 2b) du volet vers sa position d'obturation (figure 2a) atteinte lorsque le ressort 62b est comprimé au maximum.

Les caractéristiques du ressort 62b (matériaux, épaisseurs des matériaux, largueur des feuilles, longueur de la bande...) sont choisies de sorte que la température seuil est de l'ordre de 150°C. Le ressort est par exemple réalisé dans des couples de métaux choisis parmi l'une des combinaisons suivantes : Titane et alliage Cr-Ni-Fe (Chrome, Nickel-Fer), ou Nickel et Fer, ou Cuivre et alliage d'Aluminium ou Cuivre et Zinc.

L'ensemble de ventilation 50 selon l'invention permet d'ouvrir l'ouverture de ventilation 51 avec degré d'ouverture adapté en fonction des besoins de ventilation du compartiment 40 afin de ne pas impacter inutilement les performances aérodynamiques de la turbomachine 1, notamment pour le régime moteur utilisé durant la phase de croisière. Ainsi, en phase de croisière, le volet 61 est dans une position intermédiaire (figure 2b) ou dans la position d'obturation (figure 2a), et la trainée induite au niveau de l'ouverture de ventilation 51 est respectivement limitée ou nulle par rapport au cas où le volet est dans la position d'ouverture (figure 2c).

La position d'ouverture (figure 2c) est utilisée en régime ralenti du moteur 2 au sol pour lequel le débit d'air froid soufflé par la soufflante 4 est faible par rapport au débit d'air froid soufflé par la soufflante 4 en vol. La trainée induite au niveau de l'ouverture de ventilation 51 en position d'ouverture du volet 61 est relativement importante, mais n'a aucun impact sur les performances de l'avion en vol.

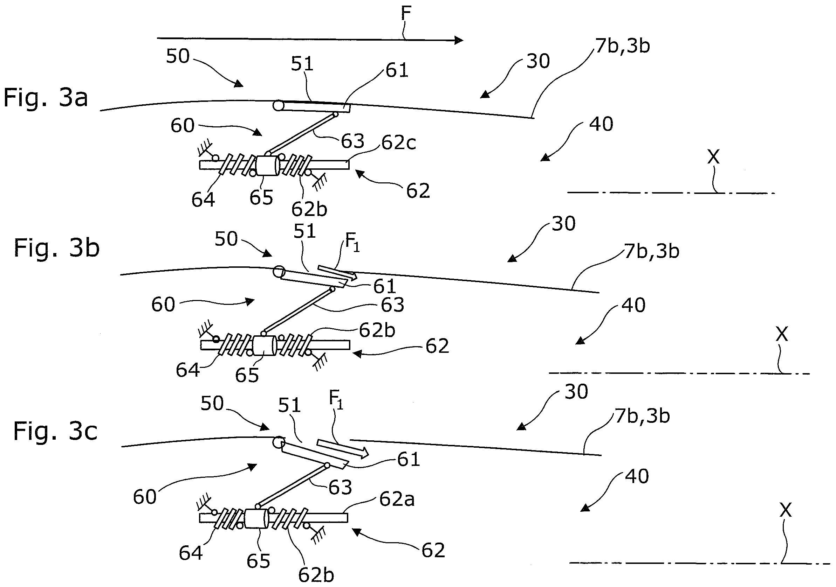

Dans un autre mode de réalisation de l'invention, et en relation avec les figures 3a-c, le volet 61 est monté autour d'un axe de pivot A perpendiculaire à l'axe moteur X entre une position d'obturation (figure 3a) dans laquelle le volet 61 obture totalement l'ouverture de ventilation 51 et une position d'ouverture (figure 3c) dans laquelle le volet 61 s'enfonce dans le compartiment 40 pour libérer l'ouverture de ventilation 51.

La liaison pivot est, par exemple, formée par une attache de type charnière fixée d'une part sur la paroi externe 7b de l'interveine (côté compartiment 40) et d'autre part au plateau 61a (du côté de la face orientée vers le compartiment 40).

Le dispositif d'actionnement passif 62 comprend, disposés à l'intérieur du compartiment 40, un tube 62a fixe avec une extrémité en contact avec un élément thermosensible 41 du compartiment 40, et comprend en outre :
- un ressort de rappel 64 (contraint en compression selon l'exemple illustré aux figures 3), (réalisé dans un matériau métallique sans mémoire de forme) ;
- un ressort 62b réalisé dans un alliage à mémoire de forme thermosensible qui entoure le tube 62a.
- une pièce intermédiaire 65, par exemple de forme cylindrique, emmanchée sur le tube 62a entre les deux ressorts 64, 62b et qui est fixée au volet 61 (du côté de la face du volet 61 orientée vers le compartiment 40) par une tige 63 articulée à la fois à la pièce intermédiaire 65 et au volet 65. La tige 63 est de préférence articulée au volet 61 le plus loin possible de l'axe de pivot A afin d'obtenir un bras de levier important.

Les ressorts 64 et 62b ainsi que la pièce intermédiaire 65 sont emmanchés sur une portion du tube 62a, dite portion de déplacement, s'étendant parallèlement à l'axe moteur X.

Dans l'exemple illustré aux figures 3a-c, l'agencement du dispositif d'actionnement passif 62 est tel que le ressort de rappel est situé en amont du ressort 62b selon le sens d'écoulement d'un flux d'air (flèche F) traversant la turbomachine 1 lors du fonctionnement de cette dernière.

Le ressort de rappel 64 a une première extrémité fixée à un élément fixe du compartiment 40 (par exemple le tube 62a, une cloison pare-feu 42, la paroi externe 7b) et une seconde extrémité fixée à la pièce intermédiaire 65. Le ressort 62b a quant à lui une première extrémité fixée à un élément fixe du compartiment et une seconde extrémité fixée à la pièce intermédiaire 65.

Le ressort 62b est éduqué de façon à se dilater de façon continue, vers une position comprimée extrême (figure 2c), lorsque sa température s'élève au-dessus d'une température seuil et au contraire à se comprimer de façon continue lorsque sa température tend vers la température de seuil. La position comprimée extrême (figure 2a) du ressort 62b est atteinte lorsque la température du ressort est proche de la température seuil.

Les ressorts 62b,64 sont dimensionnés de sorte que la valeur de rappel du ressort 64 est supérieure à la force exercée par le ressort 62b lorsque ce dernier est à la température de seuil, ou à une température inférieure à cette température de seuil.

En utilisation, lorsque la température dans le compartiment 40 dépasse la température seuil, le ressort 62b se dilate et sa seconde extrémité s'éloigne de sa première extrémité fixe, entraînant un déplacement de la pièce intermédiaire 65 et donc du volet 61 vers sa position d'ouverture (figure 3b) qui sera atteinte lorsque le ressort est dilaté au maximum, (figures 3c).

Au contraire, lorsque le ressort 62b se comprime quand la température dans le compartiment 40 tend vers la température seuil, le second ressort 64 exerce une force qui comprime d'autant plus le ressort 62b : la pièce intermédiaire 64 vers la première extrémité du ressort 64b ce qui entraîne un déplacement du volet 61 vers sa position d'obturation (figure 3b) atteinte lorsque le premier ressort est comprimé au maximum (figure 3a).

Dans ce mode de réalisation, l'effet mémoire du ressort 62b à mémoire de forme est assisté par le ressort de rappel 64 afin d'obtenir une force supplémentaire durant le déplacement du volet 61 vers sa position d'obturation pendant laquelle l'air (flèche F1) exerce une force tendant à s'opposer à ce mouvement. Une telle configuration sera ainsi préférée pour des applications à des ouvertures de ventilation 51 de grandes dimensions afin de ne pas dégrader le ressort à mémoire de forme 62b.

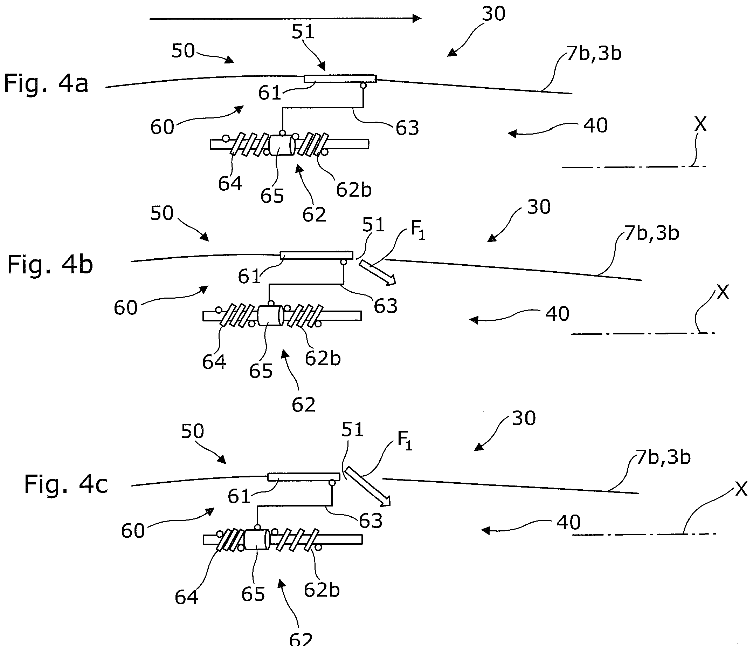

Dans un autre mode de réalisation de l'invention, et en relation avec les figures 4a-c, le volet 61 est un volet coulissant coulisse selon l'axe moteur X sur des glissières (non représentés) arrangées à l'intérieur du compartiment 40 sur la paroi externe 7b. Le volet coulissant 61 est mobile entre une position d'obturation (figure 4a) dans laquelle le volet 61 obture totalement l'ouverture de ventilation 51 et une position d'ouverture (figure 4c) dans laquelle le volet libère totalement l'ouverture de ventilation de de sorte que de l'air peut pénétrer dans le compartiment.

Le dispositif d'actionnement passif 62 du volet coulissant 61 est, par exemple, identique à celui décrit en relation avec les figures 3a-c.

En utilisation, lorsque la température dans le compartiment 40 dépasse la température seuil, le ressort 62b se dilate et sa seconde extrémité s'éloigne de sa première extrémité fixe, entraînant un déplacement de la pièce intermédiaire 65 et donc du volet 61 vers sa position d'ouverture (figure 4b) qui est atteinte lorsque le ressort 62b est dilaté au maximum (figure 4c).

Au contraire, lorsque le ressort 62b se comprime, le second ressort 64 exerce une force qui comprime d'autant plus le ressort 62b : la pièce intermédiaire se déplace 64 vers la première extrémité du ressort 64b ce qui entraîne un déplacement du volet 61 vers sa position d'obturation (figure 4b) atteinte lorsque le premier ressort est comprimé au maximum (figure 4a).

En outre et bien que décrit pour une application à un compartiment de l'interveine 7, l'invention pourrait trouver application à tout autre compartiment de la turbomachine 1 qui est délimité par des cloisons parois pare-feu, et une paroi qui sépare l'intérieur du compartiment d'un flux d'air froid dont le déplacement est consécutif du fonctionnement du moteur 2. Ainsi, en référence avec la figure 1, l'invention trouve également application à un ensemble de ventilation d'un compartiment 40 réalisé dans l'épaisseur de la nacelle 3 (l'ouverture de ventilation 51 est dans ce cas pratiquée dans la paroi interne 3b comme illustré à la figure 1, dans la partie basse de la nacelle), ou dans les bifurcations 16,17 (l'ouverture de ventilation est dans ce cas pratiquée dans une paroi de la bifurcation située dans le conduit de soufflante 30) situées dans le conduit de soufflante 30 et qui permettent d'assurer une cohésion mécanique de la turbomachine 1 en reliant entre elles la nacelle 3 et l'interveine 7.

Dans une variante des modes de réalisations décrits précédemment, le tube 62a est en contact avec au moins un élément thermosensible 41 du compartiment 40 de sorte à agir comme un caloduc qui conduit sur sa longueur une partie de la chaleur de l'élément thermosensible 41.

Le ressort à mémoire de forme 62b est en contact avec le tube 62a au niveau de la portion de déplacement de ce dernier.

Le ressort 62b est ainsi mis à la température de la portion de déplacement du tube 62a. Cette variante a donc pour avantage d'accélérer la compression ou la dilatation du ressort 62b et donc le déplacement du volet 61.

Pour optimiser la conduction de chaleur, le tube 62a est, par exemple, un tube en cuivre ou une tube creux en cuivre rempli d'un fluide caloporteur. Le tube peut également être en aluminium, titane, ou encore en inox.

## Revendications

1. Turbomachine (1) de type à double flux comprenant une nacelle (3) centrée sur un axe (X) et entourant une interveine (7), l'interveine (7) et la nacelle (3) définissant entre elles un conduit de soufflante (30) qui s'étend le long de l'axe (X), la turbomachine (1) comprenant au moins un compartiment (40) réalisé dans l'épaisseur de l'interveine (7) ou de la nacelle (3), ledit compartiment étant séparé du conduit de soufflante (30) par une paroi froide (7b, 3b) et comprenant au moins un élément thermosensible (41), le compartiment (40) étant en outre équipé d'un ensemble de ventilation (50) comprenant au moins une ouverture de ventilation (51) réalisée dans la paroi froide (7b,3b) pour faire rentrer, en utilisation, de l'air (F1) du conduit de soufflante (30) dans le compartiment (40), chaque ouverture de ventilation (51) comprenant un système d'ouverture passif (60) disposé dans le compartiment (40), ledit système comprenant un volet (61) mobile entre une position d'ouverture dans laquelle le volet (61) libère ladite ouverture (51) et une position d'obturation dans laquelle la volet (61) obture ladite ouverture (51), et un dispositif d'actionnement passif (62) du volet (61) pour déplacer le volet entre les deux positions, **caractérisée en ce que** le dispositif (62) comprend un tube (62a) et un ressort (62b) réalisé dans un alliage à mémoire de forme thermosensible de sorte que le ressort se dilate ou se comprime en fonction de la température à laquelle il est soumis, ledit ressort (62b) entoure le tube (62a) et a une première extrémité fixe et une seconde extrémité liée mécaniquement au volet (61) pour déplacer le volet (61) entre les deux positions en fonction de la température dudit ressort (62b).

2. Turbomachine (1) selon la revendication 1, **caractérisée en ce que** le volet (61) est fixé en liaison pivot au compartiment (40) selon un axe de pivot (A) perpendiculaire à l'axe (X), le volet (61) s'enfonçant à l'intérieur du compartiment (40) lorsqu'il est déplacé de la position d'obturation à la position d'ouverture.

3. Turbomachine (1) selon la revendication 1, **caractérisée en ce que** le volet (61) coulisse selon l'axe (X).

4. Turbomachine (1) selon l'une quelconque des revendications 1 à 3 **caractérisée en ce que** le ressort à mémoire de forme (62b) entoure une portion du tube (62a) disposée parallèlement à l'axe (X).

5. Turbomachine (1) selon la revendication 2, **caractérisée en ce que** le ressort à mémoire de forme (62b) entoure une portion du tube (62a) disposée perpendiculairement à l'axe (X).

6. Turbomachine (1) selon la revendication 4, **caractérisée en ce que** le dispositif d'actionnement passif (62) comprend, en outre, emmanchés sur la portion du tube (62a) :
- un ressort de rappel (64) et ayant une première extrémité fixe,
- une pièce intermédiaire (65) entourant le tube (62a) et disposé entre les deux ressorts (64, 62b) et qui est fixée au volet (61), la seconde extrémité du ressort à mémoire de forme (62b) et une seconde extrémité du ressort de rappel (64) étant fixées à la pièce intermédiaire (65) de part et d'autre de cette dernière.

7. Turbomachine (1) selon la revendication **caractérisée en ce que** le volet (61) se présente sous la forme d'un bras en forme de Z présentant un premier (61a) et un second plateaux (61b) parallèles entre eux, les deux plateaux étant joints par une pièce intermédiaire (61c) inclinée par rapport aux plans des deux plateaux, le premier plateau (61a) ayant une forme complémentaire à celle de l'ouverture de ventilation (51) et étant destiné à obturer ou libérer l'ouverture de ventilation (51), le ressort à mémoire de forme (62b) est arrangé entre la paroi froide (3b,7b) et le second plateau (61b) et ayant sa seconde extrémité mécaniquement liée au second plateau (61b).

8. Turbomachine (1) selon l'une quelconque des revendications 1 à 7, **caractérisée en ce que** le tube (62a) est en contact avec un élément thermosensible (41) compris dans le compartiment (40) et **en ce que** le un ressort (62b) réalisé dans un alliage à mémoire de forme thermosensible est en contact avec le tube (62a).

## Patentansprüche

1. Zweikreis-Turbotriebwerk (1), beinhaltend eine Gondel (3), die um eine Achse (X) zentriert ist und ein Trennelement (7) umgibt, wobei das Trennelement (7) und die Gondel (3) zwischen sich einen Gebläsekanal (30) definieren, der sich entlang der Achse (X) erstreckt, wobei das Turbotriebwerk (1) mindestens ein Abteil (40) beinhaltet, das in der Dicke des Trennelements (7) oder der Gondel (3) gebildet ist, wobei das Abteil durch eine kalte Wand (7b, 3b) von dem Gebläsekanal (30) getrennt ist und mindestens ein wärmeempfindliches Element (41) beinhaltet, wobei das Abteil (40) ferner mit einer Belüftungseinheit (50) ausgerüstet ist, die mindestens eine Belüftungsöffnung (51) beinhaltet, die in der kalten Wand (7b, 3b) gebildet ist, um im Betrieb Luft (F1) von dem Gebläsekanal (30) in das Abteil (40) zu führen, wobei jede Belüftungsöffnung (51) Folgendes beinhaltet: ein passives Öffnungssystem (60), das in dem Abteil (40) angeordnet ist, wobei das System eine Klappe (61), die zwischen einer Öffnungsposition, in der die Klappe (61) die Öffnung (51) freigibt, und einer Verschlussposition, in der die Klappe (61) die Öffnung (51) verschließt, bewegbar ist, und eine passive Betätigungsvorrichtung (62) der Klappe (61), um die Klappe zwischen den zwei Positionen zu bewegen,
**dadurch gekennzeichnet, dass** die Vorrichtung (62) ein Rohr (62a) und eine Feder (62b), die aus einer wärmeempfindlichen Formgedächtnislegierung gebildet ist, beinhaltet, sodass sich die Feder in Abhängigkeit von der Temperatur, der sie ausgesetzt ist, ausdehnt oder zusammenzieht, wobei die Feder (62b) das Rohr (62a) umgibt und ein erstes festes Ende und ein zweites Ende, das mechanisch mit der Klappe (61) verbunden ist, um die Klappe (61) in Abhängigkeit von der Temperatur der Feder (62b) zwischen den zwei Positionen zu bewegen, aufweist.

2. Turbotriebwerk (1) nach Anspruch 1, **dadurch gekennzeichnet, dass** die Klappe (61) entlang einer Schwenkachse (A), die zu der Achse (X) senkrecht ist, schwenkbar an dem Abteil (40) befestigt ist, wobei die Klappe (61) in das Innere des Abteils (40) gedrückt wird, wenn sie von der Verschlussposition in die Öffnungsposition bewegt wird.

3. Turbotriebwerk (1) nach Anspruch 1, **dadurch gekennzeichnet, dass** die Klappe (61) entlang der Achse (X) gleitet.

4. Turbotriebwerk (1) nach einem der Ansprüche 1 bis 3, **dadurch gekennzeichnet, dass** die Formgedächtnisfeder (62b) einen Abschnitt des Rohrs (62a), der parallel zu der Achse (X) angeordnet ist, umgibt.

5. Turbotriebwerk (1) nach Anspruch 2, **dadurch gekennzeichnet, dass** die Formgedächtnisfeder (62b) einen Abschnitt des Rohrs (62a), der senkrecht zu der Achse (X) angeordnet ist, umgibt.

6. Turbotriebwerk (1) nach Anspruch 4, **dadurch gekennzeichnet, dass** die passive Betätigungsvorrichtung (62) ferner, auf den Rohrabschnitt (62a) aufgesteckt, Folgendes beinhaltet:
- eine Rückstellfeder (64), die ein erstes festes Ende aufweist,
- ein Zwischenstück (65), das das Rohr (62a) umgibt und zwischen den zwei Federn (64, 62b) angeordnet ist und das an der Klappe (61) befestigt ist, wobei das zweite Ende der Formgedächtnisfeder (62b) und ein zweites Ende der Rückstellfeder (64) jeweils an einer Seite des Zwischenstücks (65) befestigt sind.

7. Turbotriebwerk (1) nach Anspruch 5, **dadurch gekennzeichnet, dass** die Klappe (61) die Form eines Z-förmigen Arms aufweist, der eine erste (61a) und eine zweite Platte (61b) aufweist, die zueinander parallel sind, wobei die zwei Platten durch ein Zwischenstück (61c), das mit Bezug auf die Ebenen der zwei Platten geneigt ist, miteinander verbunden sind, wobei die erste Platte (61a) eine zu der Belüftungsöffnung (51) komplementäre Form aufweist und dazu bestimmt ist, die Belüftungsöffnung (51) zu verschließen oder freizugeben, wobei die Formgedächtnisfeder (62b) zwischen der kalten Wand (3b, 7b) und der zweiten Platte (61b) angeordnet ist und ihr zweites Ende mechanisch mit der zweiten Platte (61b) verbunden ist.

8. Turbotriebwerk (1) nach einem der Ansprüche 1 bis 7, **dadurch gekennzeichnet, dass** das Rohr (62a) mit einem in dem Abteil (40) enthaltenen wärmeempfindlichen Element (41) in Kontakt ist und dass die eine Feder (62b), die aus einer wärmeempfindlichen Formgedächtnislegierung gebildet ist, mit dem Rohr (62a) in Kontakt ist.

## Claims

1. Turbomachine (1) of the two-flow type comprising a nacelle (3) centred on an axis (X) and surrounding an inter-duct element (7), the inter-duct element (7) and the nacelle (3) defining between them a fan duct (30) that extends along the axis (X), the turbomachine (1) comprising at least one compartment (40) created in the thickness of the inter-duct element (7) or of the nacelle (3), said compartment being separated from the fan duct (30) by a cold wall (7b, 3b) and comprising at least one heat-sensitive element (41), the compartment (40) being further equipped with a ventilation assembly (50) comprising at least one ventilation opening (51) created in the cold wall (7b, 3b) in order to cause, during use, air (F1) to enter from the fan duct (30) into the compartment (40), each ventilation opening (51) comprising a passive opening system (60) arranged in the compartment (40), said system comprising a flap (61) that is able to move between an opening position in which the flap (61) leaves said opening (51) free and a blocking position in which the flap (61) blocks said opening (51), and a device (62) for passive actuation of the flap (61) in order to move the flap between the two positions,
**characterized in that** the device (62) comprises a tube (62a) and a spring (62b) made of a heat-sensitive shape-memory alloy such that the spring expands or contracts as a function of the temperature to which it is subjected, said spring (62b) surrounds the tube (62a) and has a first end that is fixed and a second end that is mechanically connected to the flap (61) in order to move the flap (61) between the two positions as a function of the temperature of said spring (62b).

2. Turbomachine (1) according to Claim 1, **characterized in that** the flap (61) is fixed to the compartment (40) with a pivoting connection about a pivot axis (A) that is perpendicular to the axis (X), with the flap (61) entering inside the compartment (40) when it is moved from the blocking position to the opening position.

3. Turbomachine (1) according to Claim 1, **characterized in that** the flap (61) slides along the axis (X).

4. Turbomachine (1) according to any one of Claims 1 to 3, **characterized in that** the shape-memory spring (62b) surrounds a portion of the tube (62a), which portion is arranged parallel to the axis (X).

5. Turbomachine (1) according to Claim 2, **characterized in that** the shape-memory spring (62b) surrounds a portion of the tube (62a), which portion is arranged perpendicular to the axis (X).

6. Turbomachine (1) according to Claim 4, **characterized in that** the passive actuation device (62) further comprises, fitted onto the portion of the tube (62a): a return spring (64) having a first end that is fixed, an intermediate part (65) surrounding the tube (62a) and arranged between the two springs (64, 62b) and which is fixed to the flap (61), the second end of the shape-memory spring (62b) and a second end of the return spring (64) being fixed to the intermediate part (65) on either side of the latter.

7. Turbomachine (1) according to Claim 5, **characterized in that** the flap (61) is in the form of a Z-shaped arm having a first flat (61a) and a second flat (61b) that are mutually parallel, the two flats being joined by an intermediate part (61c) which is inclined with respect to the planes of the two flats, the first flat (61a) having a shape which matches that of the ventilation opening (51) and being designed to block or leave free the ventilation opening (51), the shape-memory spring (62b) is arranged between the cold wall (3b, 7b) and the second flat (61b) and having its second end mechanically connected to the second flat (61b).

8. Turbomachine (1) according to any one of Claims 1 to 7, **characterized in that** the tube (62a) is in contact with a heat-sensitive element (41) included in the compartment (40), and **in that** the one spring (62b) made of a heat-sensitive shape-memory alloy is in contact with the tube (62a).
